# EUROPÄISCHE PATENTANMELDUNG

(11) **EP 0 863 045 A1**
(43) Veröffentlichungstag der Anmeldung: **09.09.1998**
(21) Anmeldenummer: 98103517.3
(22) Anmeldetag: 27.02.1998
(51) Int. Cl.: B60P 3/24, E01H 1/10

(54) **Fluidbehälter**

(30) Priorität: 05.03.1997 DE 19708977
(71) Anmelder: HET Haller Entwicklungs- und Technologiegesellschaft mbH + Co., 12277 Berlin (DE)
(72) Erfinder: Kietzer, Klaus, Dr.-Ing., 12623 Berlin (DE)
(74) Vertreter: Rupprecht, Kay, Dipl.-Ing.

(57) **Zusammenfassung**

Es wird ein Fluidbehälter sowie ein Verfahren zum wechselseitigen Befüllen und Entleeren eines Wechseltankbehälters angegeben. Der Fluidbehälter weist eine Behälterhülle (1) auf, die einen Behälterinnenraum zur Aufnahme von Fluid umschließt, ferner eine Trennwand in dem Behälter, die den Innenraum in zwei Teilbehälter (3, 5) unterteilt und wenigstens eine Einfüll-/Auslaßöffnung (7, 9) in der Behälterhülle (1) für jeden Teilbehälter (3, 5). Ein solcher Fluidbehälter wird beispielsweise als Wechseltank für eine Müllbehälter-Reinigungsmaschine eingesetzt, wobei in dem einen Teilbehälter Frischwasser enthalten ist und in dem anderen Teilbehälter das beim Reinigungsvorgang entstehende Brauchwasser aufgefangen wird. Um das Fassungsvermögen des Gesamtbehälters zu erhöhen, ist die Trennwand als flexibles sackförmiges Diaphragma (2) ausgebildet, das je nach Füllstandsverhältnis der Teilbehälter (3, 5) membranspannungsfrei in den einen oder den anderen Teilbehälter hineinragt und dadurch das Volumen eines Teilbehälters vergrößert. Das Verfahren ist dadurch gekennzeichnet, daß der einem Teilbehälter (3) entnommene Fluidanteil durch Befüllen des anderen Teilbehälters (5) mit einem etwa gleichgroßen Fluidanteil ausgeglichen wird.

## Beschreibung

Die vorliegende Erfindung betrifft einen Fluidbehälter, mit einer Behälterhülle, die einen Behälterinnenraum zur Aufnahme von Fluid umschließt, mit einer Trennwand in dem Behälter, die den Innenraum in zwei Teilbehälter unterteilt, und mit wenigstens einer Einfüll-/Auslaßöffnung in der Behälterhülle für jeden Teilbehälter. Die Erfindung betrifft ferner ein Verfahren zum wechselseitigen Befüllen und Entleeren eines Wechseltankbehälters mit zwei Teilbehältern zur Aufnahme eines ersten und eines zweiten Fluids, die durch ein flexibles, sackartiges Diaphragma voneinander getrennt sind.

Fluidbehälter der eingangs genannten Art sind bekannt und werden beispielsweise als Wechseltank für zwei verschiedene flüssige Medien bei mobilen Müllbehälter-Reinigungsmaschinen eingesetzt. Zu diesem Zweck ist der Wechseltank auf einen Lastkraftwagen montiert und führt in einem seiner beiden Teilbehälter Frischwasser mit sich, welches dem Reinigungsapparat unter Zwischenschaltung einer Pumpe zugeführt wird, und nimmt in dem anderen Teilbehälter das durch den Reinigungsvorgang entstehende Brauchwasser wieder auf. Da die beiden Medien - einerseits das Frischwasser und andererseits das Brauchwasser - nicht miteinander vermischt werden dürfen und auch kein Brauchwasser in den Frischwasser-Teilbehälter gelangen darf, sind die beiden Teilbehälter durch die Trennwand getrennt und weisen jeweils eine eigene Einfüll-/Auslaßöffnung zum Befüllen bzw. Ablassen des Frischwassers und des Brauchwassers auf. In vielen Fällen sind auch zwei völlig von einander getrennte Tanks vorgesehen.

Bei einem solchen Wechseltank und jedem in ähnlicher Weise aufgebauten Fluidbehälter, und auch bei Verwendung von zwei völlig getrennten Behältern liegt es als Nachteil auf der Hand, daß die Ladekapazität der Müllbehälter-Reinigungsmaschine auf das Fassungsvermögen eines Teilbehälters beschränkt ist. Die Folgen sind eine nicht optimale Ausnutzung der statischen Achslasten des Lastkraftwagens sowie die Notwendigkeit, häufig eine Entsorgungsstelle anzulaufen, wo das Brauchwasser entsorgt und neues Frischwasser aufgenommen werden kann.

An dieser Problemstellung setzt die vorliegende Erfindung an, der die Aufgabe zugrunde lag, einen Fluidbehälter und ein Verfahren der eingangs genannten Art anzugeben, welches eine bessere Ausnutzung der Ladekapazität eines Lastkraftwagens ermöglicht.

Diese Aufgabe wird erfindungsgemäß mit einem Fluidbehälter mit den Merkmalen der Ansprüche 1 und 7 und mit einem Verfahren mit den Merkmalen des Anspruchs 8 gelöst. Erfindungsgemäß werden beide Fluide, in obigem Beispiel das Frischwasser und das Brauchwasser, in einem einzigen Tank befördert, dessen beide interne Teilbehälter lediglich durch ein flexibles sackförmiges Diaphragma von einander getrennt sind, das bei gleichem Füllstandsverhältnis der beiden Teilbehälter etwa in der Mitte des Gesamtbehälters schlaff herunterhängt und teilweise auf dem Behälterboden aufliegt. Wenn vor dem Einsatz der Müllbehälter-Reinigungsmaschine der Frischwassertank, also einer der Teilbehälter, gefüllt wird, strafft sich das Diaphragma und ragt, je nach seiner Größe, mehr oder weniger tief in den anderen Teilbehälter hinein und nutzt dadurch auch dessen Volumen. Somit kann der Wechseltank zwei verschiedene flüssige oder gasförmige Medien im beliebigen Teilungsverhältnis 0 ≤ V₁/V₂ ≤ ∞ aufnehmen.

Gemäß dem erfindungsgemäßen Verfahren wird dann das Volumen des dem einen Teilbehälter entnommenen Frischwasser-Anteils durch ein etwa gleiches Volumen eines etwa gleichgroßen Brauchwasser-Anteils ersetzt, so daß - lediglich durch das flexible Diaphragma getrennt - der Flüssigkeitsspiegel im Gesamtbehälter gleich bleibt bzw. durch äußere Leckagen an Höhe abnimmt.

Die Vorteile der erfindungsgemäßen Lösungen liegen in einem erhöhten Fassungsvermögen an Frisch- und Brauchwasser und in einer wesentlich besseren Ausschöpfung der statischen Achslasten des Lastkraftwagens. Des weiteren entfallen die sich auf das Fahrverhalten des Lastkraftwagens unangenehm auswirkenden Schwingungen infolge freier Oberflächen der transportierten Flüssigkeiten, die bei den bekannten Wechseltanks mit festen Wänden bei fortschreitendem Betrieb der Müllbehälter-Reinigungsmaschine stark zunehmen. Somit haben die beiden Teilbehälter jeweils ein flexibles Volumen, das - je nach Größe des sackförmigen Diaphragmas - bis zu 100 % des Fassungsvermögens des Gesamtbehälters betragen kann. Je nach dem Füllstandsverhältnis der Teilbehälter bewegt sich die flexible Scheidewand (Diaphragma) in den einen Teilbehälter und vergrößert somit das Fassungsvermögen des anderen Teilbehälters.

Vorteilhafte Weiterbildungen der Erfindung sind in den Unternsprüchen 2 bis 6 angegeben.

So ist das Diaphragma derart bemessen, daß des jeweils komplett gefüllte Raum membranspannungsfrei ausgefüllt wird und sich an der Behälterwand abstützt.

Zur Verbindung des Diaphragmas mit der Innenwandung des Behälters ist vorgesehen, daß es mittels eines zylindrischen Profils derart an der Innenwandung befestigt ist, daß der Rand des Diaphragmas, quasi der "Sackrand", zwischen dem zylindrischen Profil und der Innenwandung eingeklemmt und das Profil mittels Schrauben an der Innenwandung befestigt ist. Je nach dem geometrischen Aufbau der Innenwandung des Behälters können selbstverständlich auch mehrere zylindrische Profile vorgesehen sein, insbesondere dann, wenn der Behälter einen eher eckigen Querschnitt aufweist. Mit den zylindrischen Profilen ist eine sehr schonende Befestigung des flexiblen Diaphragmas möglich, und bei dessen Bewegung von einem Teilbehälter in den anderen legt sich der Randbereich des Diaphragmas um das zylindrische Profil, wodurch ein Knicken des Diaphragmas in diesem Bereich vermieden und damit die Gefahr eines Abrisses verringert wird.

Vorzugsweise besteht das Diaphragma aus Gummi oder einem gummiähnlichem Material wie beispielsweise PVC. Somit ist das Diaphragma billig herzustellen, mit geringen Kosten auszutauschen und verhältnismäßig verschleißarm.

Um zu gewährleisten, daß sich der Fluiddruck, also beispielsweise der Wasserdruck, stets auf beiden Seiten des Diaphragmas ausbilden kann, ist vorzugsweise je ein Lochblech vorgesehen, daß in jedem Teilbehälter vom Behälterboden beabstandet angeordnet ist. Durch diese Weiterbildung wird verhindert, daß das Diaphragma, das beim Entleeren des einen Teilbehälters mehr oder weniger schlaff auf den Behälterboden sinkt, sich dort durch einem entstehenden Unterdruck auf dem Behälterboden festsaugt und somit beim Befüllen des anderen Teilbehälters möglicherweise nicht oder nicht ohne weiteres vom Behälterboden abheben kann. Die Lochbleche gewährleisten ferner, daß die Belastung des Diaphragmas lediglich auf sein Eigengewicht, vermindert um seinen Auftrieb beschränkt ist.

Zur Art und Weise der Anordnung der Lochbleche ist vorgesehen, daß sie in der Nähe der Befestigungslinie des Diaphragmas auf dem Boden des Behälters ansetzen und sich unter einem Steigungswinkel bis zur jeweiligen Stirnwand des Behälters erstrecken. Die Lochbleche bilden somit eine Rampe, auf der das Diaphragma im erschlafften Zustand aufliegt und durch deren Löcher beim Befüllen des anderen Teilbehälters Flüssigkeit dringen und das Diaphragma anheben kann.

Im folgenden wird ein bevorzugtes Ausführungsbeispiel der Erfindung anhand einer Zeichnung näher erläutert.

Es zeigen
- Fig. 1: eine Teilansicht auf die Stirnwand eines Fluidbehälters in Form eines Wechseltanks;
- Fig. 2: eine Seitenansicht des Wechseltanks, teilweise aufgebrochen;
- Fig. 3: eine Draufsicht auf den Wechseltank gemäß Figur 2, teilweise aufgebrochen; und
- Fig. 4: einen Detail-Schnitt gemäß IV der Figur 2.

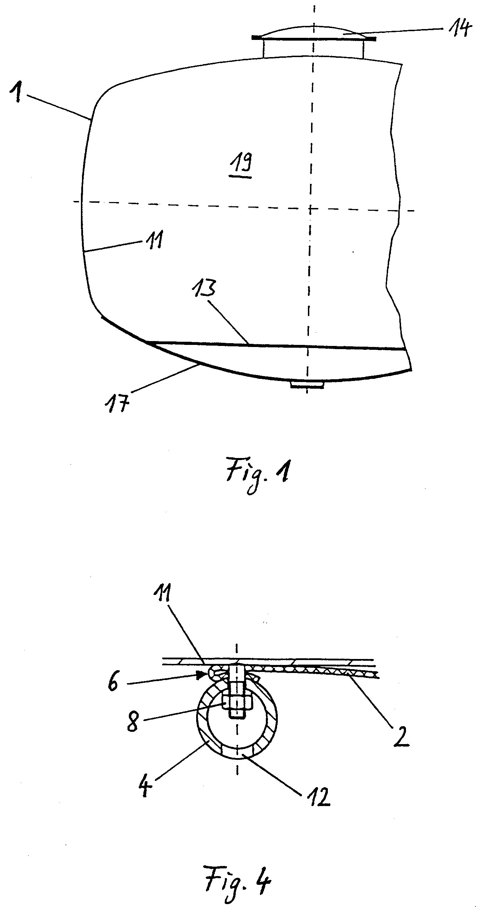

Fig. 1 zeigt eine Teil-Ansicht einer Stirnwand 19 einer Behälterhülle 1 eines Fluidbehälters in Form eines Wechseltanks. Der Wechseltank weist die übliche bauchige Form auf und ist mit Lochblechen 13, 15 ausgestattet, die vom Boden 17 des Behälters beabstandet an der Innenwandung 11 des Behälters befestigt sind. In dieser Darstellung ist nur das Lochblech 13 zu sehen. Auf der Oberseilte des Behälters ist ein Mannloch 14 vorgesehen. Die üblicherweise vorhandene Füllstandsanzeige, die Tankbelüftung und eine zusätzliche Einfüllöffnung zur Frischwasserbefüllung aus dem Wassernetz sind nicht dargestellt.

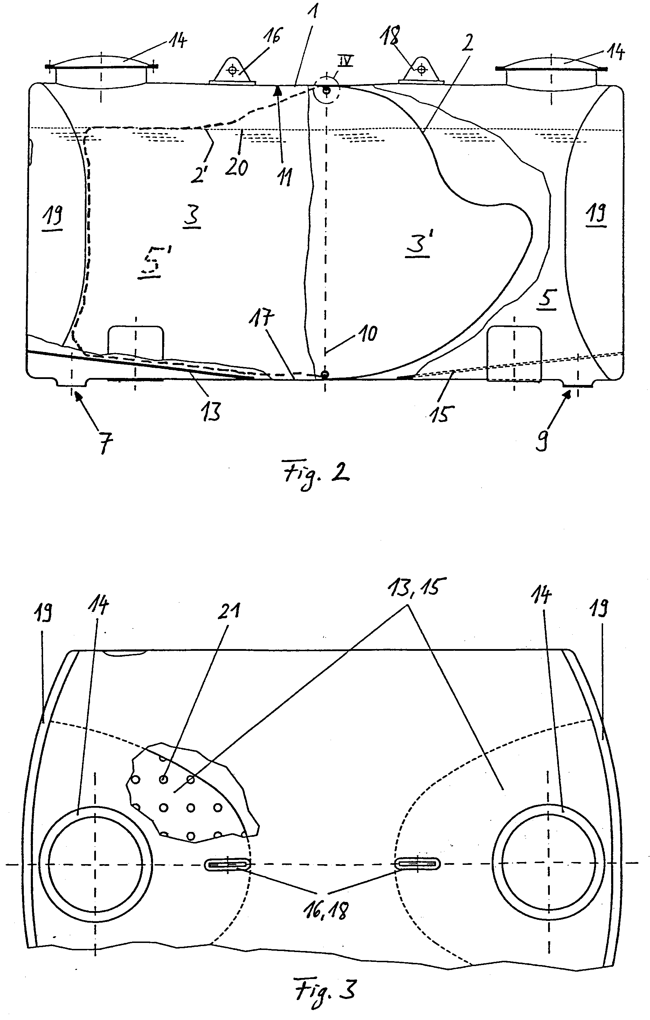

Figur 2 zeigt eine Seitenansicht des Wechseltanks gemäß Figur 1, die teilweise aufgebrochen dargestellt ist und einen Einblick in den linken unteren Teil und in den rechten Teil des Tanks oder Behälters ermöglicht. Der Wechseltank oder Fluidbehälter weist eine Behälterhülle 1 auf, deren Innenraum durch ein flexibles sackförmiges Diaphragma 2 aus Gummi oder gummiähnlichem Material in zwei Teilbehälter 3, 5 unterteilt ist. Jedem Teilbehälter 3, 5 ist im Boden 17 des Behälters eine Einfüll-/Auslaßöffnung 7, 9 und auf der Oberseite des Behälters ein Mannloch 14 zugeordnet. Ferner sind auf der Oberseite des Behälters zwei Transportaugen 16, 18 zum Transport des Behälters vorgesehen. Üblicherweise wird dieser Behälter als Wechseltank auf einen Lastkraftwagen montiert und als mobile Müllbehälter-Reinigungsmaschine eingesetzt. Das flexible sackartige Diaphragma 2 ist derart dimensioniert, daß es sich je nach dem Füllstandsverhältnis der Teilbehälter 3, 5 in den einen oder den anderen Teilbehälter hineinbewegt und dabei das Volumen des einen Teilbehälters - in Fig. 2 ist es der Teilbehälter 3 - vergrößert, während es das Volumen des anderen Teilbehälters 5 um das selbe Maß verringert. Die Größe oder besser: die Tiefe des sackartigen Diaphragmas 2 ist derart bemessen, daß es sich membranspannungsfrei an der jeweiligen Innenwandung 11 des Behälters abstützt. Wenn beide Teilbehälter 3, 5 gleichmäßig befüllt oder leer sind, liegt das Diaphragma 2 teilweise schlaff auf dem Boden 17 des Behälters auf, wo Lochbleche 13, 15 dafür sorgen, daß es sich nicht am Boden 17 festsaugt. Die Lochbleche 13, 15 sind nämlich vom Behälterboden 17 beabstandet angeordnet und verlaufen rampenförmig vom Boden 17 zu den Stirnwänden 19 des Behälters und ermöglichen es somit, daß beim Befüllen des jeweiligen Teilbehälters 3, 5 auch Flüssigkeit von unten unter das Diaphragma 2 gelangt und es damit anhebt. Dadurch ist in vorteilhafter Weise die Belastung des Diaphragmas 2 auf sein Eigengewicht beschränkt, was noch dazu noch um seinen Auftrieb vermindert wird. Das Diaphragma 2 ist an der Behälterinnenwandung 11 etwa in der Mitte des Gesamtbehälters, dargestellt duch die gestrichelte Linie 10, derart befestigt, daß sich das Volumen 3' des Diaphragmasacks zu dem Volumen des Teilbehälters 3 addiert. Würde demgegenüber dem Teilbehälter 3 Flüssigkeit entnommen und dem Teilbehälter 5 zugeführt werden, würde sich das Diaphragma 2 langsam in den Teilbehälter 3 hineinbewegen und somit das Volumen des Teilbehälters 5 um das Volumen 5' vergrößern, das gestrichelt dargestellt ist. Somit kann der Wechseltank zwei verschiedene flüssige oder gasförmige Medien im beliebigen Teilungsverhältnis 0 ≤ V₁/V₂ ≤ ∞ aufnehmen.

Fig. 3 zeigt eine Draufsicht auf die Oberseite des Wechseltanks gemäß Fig. 2. In der linken Hälfte ist die Oberseite des Tanks aufgebrochen dargestellt, so daß ein Blick auf das Lochblech 13 mit seinen Löchern 21 frei wird.

Fig. 4 zeigt in einem Detail-Schnitt gemäß IV der Fig. 2 die Befestigungsart des Diaphragmas 2 an der Innenwandung 11 des Wechseltanks. Der Rand 6 des Diaphragmas 2 ist zwischen einem zylindrischen Profil 4 und der Innenwand 11 des Behälters eingeklemmt und das Profil 4 ist mittels Schrauben 8, von denen hier nur eine zu sehen ist, an der Innenwandung 11 befestigt. Um einem Ausreißen des Diaphragmas 2 weiter entgegenzuwirken, ist der Rand 6 zu einer Schlaufe geformt. Die Schrauben 8 werden durch Bohrungen 12 in dem zylindrischen Profil gesteckt und verschraubt. Das Profil selbst kann, wie das Diaphragma 2, aus Gummi oder gummiähnlichem Material, insbesondere aus Hartgummi oder PVC bestehen.

Im folgenden wird das erfindungsgemäße Verfahren zum wechselseitigen Befüllen und Entleeren des Wechseltanks anhand des Beispiels einer mobilen Müllbehälter-Reinigungsmaschine und unter Bezugnahme auf Fig. 2 nochmals erläutert.

Ein Wechseltankbehälter einer mobilen Müllbehälter-Reinigungsmaschine ist ebenfalls ein Behälter mit zwei Teilbehältern 3, 5, wobei in einem Teilbehälter 3 Frischwasser enthalten ist, welches dem Reinigungsapparat mittels einer Pumpe zugeführt wird, und wobei das durch den Reinigungsvorgang entstandene Brauchwasser in dem zweiten Teilbehälter 5 aufgefangen wird. Vor Inbetriebnahme der Müllbehälter-Reinigungsmaschine wird somit beispielsweise der Teilbehälter 3 durch eine nicht dargestellte, aber auf der Oberseite des Tanks angeordnete Einfüllöffnung mit Frischwasser befüllt, woraufhin sich das im leeren Zustand des Tanks schlaff herunterhängende sackartige Diaphragma strafft und in den Teilbehälter 5 hineinbewegt und somit ein zusätzliches Volumen 3' für das Frischwasser zur Verfügung stellt. Bei entsprechender Dimensionierung des Diaphragmas 2 kann das Volumen 3' dem gesamten Volumen des Teilbehälters 5 entsprechen. Bei der Entnahme von Frischwasser würde normalerweise der Wasserspiegel 20 sinken. Da jedoch erfindungsgemäß der dem Teilbehälter 3 entnommene Frischwasseranteil durch Befüllen des anderen Teilbehälters 5 mit einem etwa gleichgroßen Brauchwasseranteil ausgeglichen wird, bleibt der Flüssigkeitsspiegel 20 etwa auf dem gleichen Stand wie vorher. Da sich die im Teilbehälter 3 befindliche Frischwassermenge ständig verringert und sich andererseits die Brauchwassermenge in dem Teilbehälter 5 ständig vergrößert, bewegt sich das flexible Diaphragma 2 von dem rechten Teilbehälter 5, wo es in Fig. 2 eingezeichnet ist, langsam in den Teilbehälter 3 und vergrößert nunmehr das Volumen des Teilbehälters 5 um das zusätzliche Volumen 5', wie es durch das gestrichelt dargestellte Diaphragma 2' angedeutet ist.

## Patentansprüche

1. Fluidbehälter, mit einer Behälterhülle (1), die einen Behälterinnenraum zur Aufnahme von Fluid umschließt, mit einer Trennwand in dem Behälter, die den Innenraum in zwei Teilbehälter (3, 5) unterteilt, und mit wenigstens einer Einfüll/Auslaßöffnung (7, 9) in der Behälterhülle (1) für jeden Teilbehälter (3, 5),
**dadurch gekennzeichnet, daß**
die Trennwand als flexibles sackförmiges Diaphragma (2) ausgebildet ist, das je nach Füllstandsverhältnis der Teilbehälter (3, 5) in den einen oder den anderen der Teilbehälter (3, 5) hineinragt.

2. Fluidbehälter nach Anspruch 1,
**dadurch gekennzeichnet, daß**
das Diaphragma (2) derart bemessen ist, daß es sich an der Innenwandung (11) des jeweiligen Teilbehälters (3, 5) abstützt, in den es hineinragt.

3. Fluidbehälter nach einem der Ansprüche 1 oder 2,
**dadurch gekennzeichnet, daß**
das Diaphragma (2) mittels eines (oder mehrerer) zylindrischen Profils (4) derart an der Innenwandung (11) des Behälters befestigt ist, daß der Rand (6) des Diaphragmas (2) zwischen dem zylindrischen Profil (4) und der Innenwandung (11) eingeklemmt und das Profil (4) mittels Schrauben (8) an der Innenwandung (11) befestigt ist.

4. Fluidbehälter nach einem der Ansprüche 1 bis 3,
**dadurch gekennzeichnet, daß**
das Diaphragma (2) aus Gummi oder gummiähnlichem Material besteht.

5. Fluidbehälter nach einem der Ansprüche 1 bis 4,
**gekennzeichnet durch**
je ein Lochblech (13, 15), das vom Boden (17) des Behälters beabstanded in jedem Teilbehälter (3,5) vorgesehen ist.

6. Fluidbehälter nach Anspruch 5,
**dadurch gekennzeichnet, daß**
jedes Lochblech (13, 15) in der Nähe der Befestigungslinie (19) des Diaphragmas (2) auf dem Boden (17) des Behälters ansetzt und sich unter einem Steigungswinkel bis zur Stirnwand (19) des Behälters erstreckt.

7. Fluidbehälter nach dem Oberbegriff des Anspruchs 1,
**dadurch gekennzeichnet, daß**
die Trennwand variabel, insbesondere verschiebbar ausgebildet ist, derart, daß die Volumenanteile der beiden Teilbehälter (3,5) in Bezug auf das Gesamtvolumen des Behälters variabel sind.

8. Verfahren zum wechselseitigen Befüllen und Entleeren eines Wechseltankbehälters mit zwei Teilbehältern (3, 5) zur Aufnahme eines ersten und eines zweiten Fluids, die durch ein flexibles, sackartiges Diaphragma (2) voneinander getrennt sind,
**dadurch gekennzeichnet, daß**
der einem Teilbehälter (3) entnommene Fluidanteil durch Befüllen des anderen Teilbehälters (5) mit einem etwa gleichgroßen Fluidanteil ausgeglichen wird.
